# EUROPÄISCHE PATENTSCHRIFT

(11) **EP 0 948 148 B1**
(45) Veröffentlichungstag und Bekanntmachung des Hinweises auf die Patenterteilung: **23.03.2005**
(21) Anmeldenummer: 99106333.0
(22) Anmeldetag: 26.03.1999
(51) Int. Cl.: H04B 7/26, H04Q 7/22

(54) **Verfahren zum drahtlosen Übertragen von Sprachsignaldaten und Allgemeindaten und Endeinrichtung zur Realisierung eines solchen Verfahrens**
Method of wireless speech data and general data transmission and terminal for realising such a method
Procédé de transmission radio de données de parole et de données générales et terminal pour réaliser un tel procédé

(30) Priorität: 31.03.1998 DE 19814436
(43) Veröffentlichungstag der Anmeldung: 06.10.1999
(73) Patentinhaber: SIEMENS AKTIENGESELLSCHAFT, 80333 München (DE)
(72) Erfinder: Rodler, Hermann, Dr., 82041 Oberhaching (DE); Kokot, Mathias, 81373 München (DE)

(56) Entgegenhaltungen:
- EP-A- 0 692 918
- WO-A-93/15573
- WO-A-97/28664
- WO-A-98/04055
- US-A- 5 121 385
- US-A- 5 533 004
- US-A- 5 590 133

## Beschreibung

Die Erfindung betrifft ein Verfahren zum drahtlosen Übertragen von Sprachsignaldaten und Allgemeindaten zwischen einer Endeinrichtung und einer über eine mehrkanalige Luftschnittstelle mit der Endeinrichtung gekoppelten Basisstation, die ihrerseits an ein Kommunikationsnetz angeschlossen ist. Außerdem wird eine Endeinrichtung zur Realisierung eines solchen Verfahrens angegeben. Unter dem Begriff Allgemeindaten sollen im folgenden Daten unterschiedlicher Kategorien, wie z.B. Dateidaten, Videodaten, Faxdaten, Meßdaten, Programmdaten etc., verstanden werden. Ein Kommunikationsnetz kann in diesem Zusammenhang unter anderem ein Netz zur Sprach-, Video- und/oder Datenkommunikation sein.

Es ist bekannt, Endeinrichtungen über eine mehrkanalige Luftschnittstelle an eine an ein Kommunikationsnetz angeschlossene Basisstation zu koppeln und über diese an das Kommunikationsnetz anzubinden. Bei Endeinrichtungen zur Sprachkommunikation ist diese Art einer Netzanbindung inzwischen sehr gebräuchlich. Im Zuge einer Ausweitung von Kommunikationsmöglichkeiten wird jedoch angestrebt über drahtlos angekoppelte Endeinrichtungen zur Sprachkommunikation neben Sprachsignalen auch Daten anderer Kategorien, wie z.B. Videodaten oder zur Anbindung eines tragbaren Rechners an ein Datennetz auszutauschende Daten, zu übertragen. Häufig sind die Daten dabei in Quasi-Echtzeit, wie z.B. bei synchroner Sprach- und Video- übertragung, zu übermitteln.

Bekannte Verfahren zum drahtlosen Austausch von Sprachsignalen und Allgemeindaten zwischen einer Endeinrichtung und einer Basisstation basieren auf synchronen Übertragungsverfahren, wie z.B. einer Übertragung innerhalb fester Zeitmultiplexrahmen, für die Sprachsignale. Die Allgemeindaten werden dabei häufig auf dem gleichen Weg wie die Sprachsignale, d.h. mittels synchroner Übertragungsverfahren, übertragen, indem sie, z.B. per Modem, in Signale des Sprachsignalbandes umgesetzt werden, die anschließend wie Sprachsignale übertragen werden. Alternativ dazu werden Allgemeindaten auch in separaten, dazu vorgesehenen Übertragungskanälen mittels synchroner oder auch asynchroner Übertragungsverfahren übermittelt. Eine separate Übertragung erfordert jedoch in der Regel eine Sonderbehandlung der Allgemeindaten sowohl in der Endeinrichtung als auch in der Basisstation, was mit zusätzlichem Aufwand verbunden ist.

Sprachsignale und Allgemeindaten können mit solchen Verfahren nur nacheinander über den gleichen Übertragungskanal übermittelt werden, so daß ein Übertragungskanal während einer Übertragung für die jeweils andere Datenkategorie gesperrt ist. Außerdem ist bei einem Umsetzen ins Sprachsignalband die Übertragungsbandbreite für Allgemeindaten durch die für Sprachsignale zur Verfügung stehende Bandbreite begrenzt. Ein Überschreiten dieser vorgegebenen Bandbreite macht mitunter aufwendige Zusatzmaßnahmen, wie z.B. eine Aufteilung eines zu übertragenden Allgemeindatenstroms auf mehrere Sprachkanäle in der Endeinrichtung und dessen Zusammenführung in der Basisstation erforderlich. Darüber hinaus erscheint eine Umsetzung von digitalen Daten in Signale des Sprachsignalbandes oft als umständlich, insbesondere im Hinblick darauf, daß Signale zum Übertragen über eine Luftschnittstelle häufig wieder digitalisiert werden müssen.

In dem Dokument WO 98/04055 A1 ist ein Übertragungsverfahren offenbart, bei dem Sprachdaten sowie Allgemeindaten enthaltende Datenpakete gemeinsam über eine Luftschnittstelle übertragen werden. Die Übertragung der Datenpakete kann dabei asynchron erfolgen.

Eine gemeinsame Übertragung von Sprach- und Allgemeindaten über eine Luftschnittstelle ist auch aus den Dokumenten WO 93/15573 A1 und US 5533004 bekannt.

Bei den in den genannten Dokumenten offenbarten Verfahren werden Sprachdaten und Allgemeindaten im Rahmen ihrer Übertragung über die Luftschnittstelle allerdings auf unterschiedliche Weise behandelt. Eine solche uneinheitliche Übertragung impliziert jedoch in der Regel eine aufwändige Mehrfachauslegung der Übertragungssteuerung.

Die Aufgabe der vorliegenden Erfindung besteht darin, ein verbessertes Verfahren zum drahtlosen Übertragen von Sprachsignaldaten und Allgemeindaten zwischen einer Endeinrichtung und einer über eine mehrkanalige Luftschnittstelle angekoppelte Basisstation anzugeben, das ein einheitliches Übertragen von Daten unterschiedlicher Kategorie in einem gemeinsamen Übertragungskanal erlaubt. Außerdem ist eine geeignete Endeinrichtung zur Realisierung des Verfahrens anzugeben.

Gelöst wird diese Aufgabe erfindungsgemäß durch ein Verfahren mit den Merkmalen des Patentanspruchs 1 und eine Anordnung mit den Merkmalen des Patentanspruchs 6.

Vorteilhafte Weiterbildungen der Erfindung sind in den Unteransprüchen angegeben.

Ein erfindungsgemäßes Verfahren basiert auf einer einheitlichen digitalen Verarbeitung sowohl von Allgemeindaten als auch von Sprachsignalen, wobei letztere gegebenenfalls vorher zu digitalisieren, d.h. in Sprachsignaldaten umzusetzen sind. Eine einheitliche digitale Verarbeitung der Daten vereinfacht deren Übertragung, da sowohl in der Endeinrichtung als auch in der Basisstation Einrichtungen, die bei einer Sonderbehandlung einzelner Datenkategorien notwendig wären, wie z.B. ein Modem, entfallen können.

Sowohl Sprachsignaldaten als auch Allgemeindaten werden erfindungsgemäß in digitale Datenpakete umgesetzt, die jeweils eine Netzadresse eines Übertragungsziels des jeweiligen Datenpakets als Zielinformation enthalten und asynchron über die Luftschnittstelle übertragen werden. Der Umsetzung und asynchronen Übertragung können dabei vorzugsweise mit der dritten Schicht (der Vermittlungsschicht) aufsetzende, standardisierte Übertragungsprotokolle, wie z.B. die in Datennetzen häufig verwendeten TCP/IP-, IPX- oder X.25-Protokolle, zugrunde gelegt werden. Vorteilhaft ist es, ein Übertragungprotokoll zu verwenden, das auch vom Kommunikationsnetz unterstützt wird, wodurch die Notwendigkeit einer gegebenenfalls aufwendigen Protokollumsetzung auf höheren Protokollschichten, z.B. durch ein sogenanntes Gateway, zwischen Basisstation und Kommunikationsnetz in der Regel entfällt.

Ein asynchroner Austausch von Datenpaketen zwischen Endeinrichtung und Basisstation läßt sich mit einer Vielzahl drahtloser Übertragungsverfahren realisieren bzw. kombinieren. Vorteilhafte Ausführungsformen des erfindungsgemäßen Verfahrens ergeben sich insbesondere mit Luftschnittstellen gemäß den ETSI-Standard-Definitionen DECT (Digital Enhanced Cordless Telecommunications), DCS (Digital Cellular System) oder GSM (Global System for Mobile Communication) oder einer Luftschnittstelle gemäß der zur Standardisierung vorgeschlagenen UMTS-Definition (Universal Mobile Telecommunication System); ferner mit Luftschnittstellen gemäß der ARI-Standard-Definition PHS(Personal Handyphone System).

Aufgrund der asynchronen Übertragungstechnik ist es möglich, die Übertragung auf einfache Weise wechselnden Datenraten sowohl des Sprachsignaldatenstroms als auch des Allgemeindatenstroms anzupassen, indem beispielsweise die Größe, die Rate oder der Füllungsgrad der zu übertragenden Datenpakete geeignet variiert wird.

Weiterhin ist eine asynchrone Übertragung der vorstehend beschriebenen Art von adressierten Datenpaketen nicht an eine feste Kanalzuordnung gebunden.
Vielmehr können die Datenpakete nach vorgebbaren Kriterien auf verschiedene, auch wechselnde Kanäle verteilt werden, um beispielsweise die Übertragungskapazität oder -qualität zu optimieren. Insbesondere können Sprachsignaldaten und Allgemeindaten enthaltende Datenpakete auch quasisimultan über gemeinsame Kanäle der Luftschnittstelle übertragen werden, wodurch die verfügbare Übertragungskapazität einzelner Kanäle in der Regel besser ausgenutzt werden kann. So kann beispielsweise ein zur Sprachübertragung verwendeter Kanal, der in Phasen geringeren Aufkommens von Sprachsignaldaten (z.B. in Sprechpausen) nur teilweise ausgelastet ist, zur Übertragung von Daten anderer Kategorien oder aus anderen Quellen genutzt werden, anstatt von wenigen zu übertragenden Sprachsignaldaten blockiert zu werden.

Sowohl Sprachsignaldaten als auch Allgemeindaten können vor einer drahtlosen Übertragung durch Anwendung von Datenkompressionsverfahren zur Steigerung der Datenübertragungrate komprimiert und in dieser Form übertragen werden. Nach der Übertragung werden die komprimierten Daten durch Dekomprimieren dann wieder in den ursprünglichen oder einen dazu gleichwertigen Zustand zurückgeführt.

Nach einer vorteilhaften Weiterbildung der Erfindung können Datenpakete mit unterschiedlicher Priorität übertragen werden. Datenpakete höherer Priorität sind dabei jeweils gegenüber Datenpaketen mit geringerer Priorität bevorzugt zu übermitteln. Auf diese Weise kann insbesondere die Verzögerung von in Quasi-Echtzeit zu übermittelnden Daten durch Zuordnung einer hohen Priorität in der Regel gering gehalten werden. Eine entsprechende Funktionalität kann beispielsweise durch Verwendung des IPv6-Übertragungsprotokolls, das unterschiedliche Übermittlungsprioritäten vorsieht, bereitgestellt werden.

Gemäß einer vorteilhaften Ausführungsform der Erfindung können einer Endeinrichtung eine oder mehrere eindeutige Netzadressen gemäß einem im Kommunikationsnetz verwendeten Übertragungsprotokoll zugeordnet werden, die eine direkte Adressierung der Endeinrichtung vom Kommunikationsnetz bzw. von anderen Endeinrichtungen und/oder Basisstationen aus ermöglichen. Endeinrichtungen können so als Netzknoten in das Kommunikationsnetz integriert werden. Zu übertragende Datenpakete können in diesem Fall mit der Netzadresse eines Übertragungsziels als Zielinformation transparent zwischen Netzknoten und Endeinrichtungen ohne die Notwendigkeit einer zusätzlichen Vermittlung ausgetauscht werden. Die Basisstation hat dabei unter anderem die Aufgabe, die mit einer die angekoppelte Endeinrichtung identifizierenden Netzadresse versehenen Datenpakete als an die Endeinrichtung adressiert zu erkennen und an diese zu übertragen.

Bei Verwendung geeigneter Übertragungsprotokolle, wie z.B. dem IPv6-Protokoll, können auch einzelnen, mit einer Endeinrichtung verknüpften Anwendungen eindeutige Netzadressen zugeordnet werden. In diesen Fällen können zu übertragenden Sprachsignaldaten und Allgemeindaten schon beim Senden die passenden Zielanwendungen am Übermittlungsziel, wie z.B. Anwendungen zur Sprach-, Video- oder Faxausgabe, durch Angeben deren jeweiliger Netzadresse als Zielinformation vorgegeben werden.

Eine Endeinrichtung, mit welcher das erfindungsgemäße Verfahren realisiert werden kann, verfügt zum Übertragen von Sprachsignaldaten und Allgemeindaten an die über eine mehrkanalige Luftschnittstelle angekoppelte Basisstation neben Eingabeeinrichtungen für Sprachsignaldaten und Allgemeindaten erfindungsgemäß über eine Einrichtung zum Umsetzen eingegebener Daten in digitale Datenpakete sowie eine Sendeeinrichtung zum asynchronen, drahtlosen Übertragen der Datenpakete an die Basisstation. Sprachsignaldaten und Allgemeindaten sind dabei zum Übertragen im selben Kanal der Luftschnittstelle vorgesehen. Zum Empfang von Sprachsignaldaten und Allgemeindaten sind außerdem eine Einrichtung zum Empfangen der von der Basisstation asynchron übertragenen Datenpakete, eine Einrichtung zum Extrahieren von Sprachsignaldaten und Allgemeindaten aus den empfangenen Datenpaketen sowie Einrichtungen zum Ausgeben der extrahierten Sprachsignaldaten und Allgemeindaten vorgesehen.

Nach einer vorteilhaften Weiterbildung der Endeinrichtung kann eine Einrichtung zum Steuern der jeweiligen Rate, mit der eingegebene Daten in digitale Datenpakete umgesetzt werden, vorgesehen sein. Damit können beispielsweise in Quasi-Echtzeit zu übertragende Sprachsignaldaten und/oder Videodaten gegenüber anderen Daten bevorzugt übertragen werden, indem die Rate der zum Übertragen der letztgenannten Daten erzeugten digitalen Datenpakete zugunsten der zum Übertragen der Sprachsignaldaten und/oder Videodaten erzeugten digitalen Datenpakete verringert wird.

Die Erfindung wird nachfolgend anhand eines Ausführungsbeispiels unter Bezugnahme auf die Zeichnung näher erläutert.

Dabei zeigen
Fig 1 eine mit einer Basisstation über eine Luftschnittstelle verbundene Endeinrichtung in schematischer Darstellung,
Fig 2 eine grafische Veranschaulichung der Übertragung von Sprachsignaldaten und Allgemeindaten mit Bezug auf die beteiligten Übertragungsprotokolle.

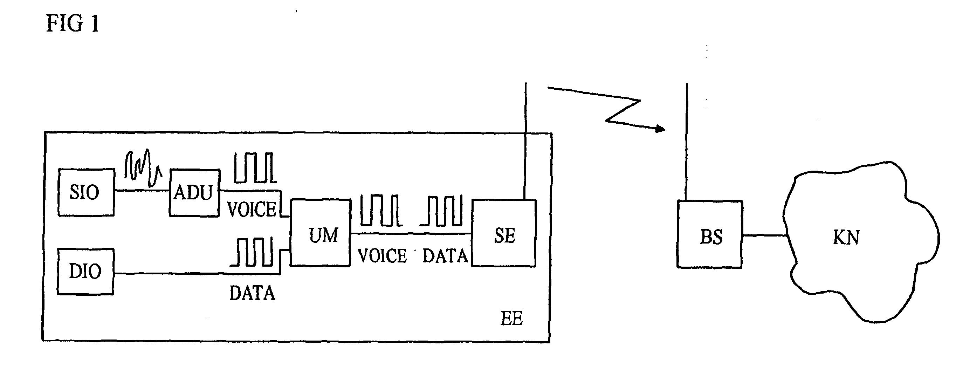

In Fig 1 ist eine Endeinrichtung EE und eine damit über eine mehrkanalige Luftschnittstelle verbundene Basisstation BS dargestellt, wobei die Basisstation BS ihrerseits an ein Kommunikationsnetz KN angekoppelt ist, das in diesem Ausführungsbeispiel ein TCP/IP-Protokoll unterstützt. Die Endeinrichtung EE enthält als Funktionskomponenten eine Sende/Empfangseinrichtung SE zum drahtlosen Austausch digitaler Datenpakete mit der Basisstation BS und ein daran angeschlossenes Umsetzungsmodul UM, welches wiederum mit einer Ein/Ausgabeeinrichtung DIO für Allgemeindaten und über einen A/D-D/A-Umsetzer ADU mit einer Ein/Ausgabeeinrichtung SIO für analoge Sprachsignale gekoppelt ist. Ein A/D-D/A-Umsetzer ADU ist nur notwendig, falls die Sprachsignale, wie im Ausführungsbeispiel, in analoger Form ein- bzw. auszugeben sind. Der Endeinrichtung ist außerdem eine eindeutige Netzadresse, hier eine IP-Adresse, zugeordnet.

Im folgenden wird zunächst eine Übermittlung von an der Ein/Ausgabeeinrichtung SIO eingegebenen Sprachsignalen und an der Ein/Ausgabeeinrichtung DIO eingegebenen Allgemeindaten von der Endeinrichtung EE über die Basisstation BS ins Kommunikationsnetz KN im Rahmen einer Verbindung zu einem Übermittlungsziel, wie z.B. einer zweiten an das Kommunikationsnetz KN angeschlossenen Endeinrichtung, beschrieben.

Ein von der Ein/Ausgabeeinrichtung SIO kommender Strom von analogen Sprachsignalen wird zunächst dem A/D-D/A-Umsetzer DAU zugeführt, der die analogen Sprachsignale in einen Strom digitaler Sprachsignaldaten umsetzt und diesen dem Umsetzungsmodul UM zuführt. Parallel dazu wird ein von der Ein/Ausgabeeinrichtung DIO kommender Strom von Allgemeindaten, der sich beispielsweise aus Dateidaten oder sprachsynchronen Videodaten zusammensetzen kann, ebenfalls dem Umsetzungsmodul UM zugeleitet. Im Umsetzungsmodul UM werden die eintreffenden Datenströme gemäß einem TCP/IP-Protokoll in einzelne Sprachsignaldaten und/oder Allgemeindaten enthaltende Datensegmente aufgeteilt und als Nutzinformation (Payload) in TCP/IP-Datenpakete eingefügt, die jeweils eine Netzadresse, d.h. eine IP-Adresse, des Übermittlungsziels als Zielinformation enthalten. Die TCP/IP-Datenpakete werden daraufhin asynchron der Sende/Empfangseinrichtung SE zugeführt, von der sie über eine Luftschnittstelle gemäß DECT-Standard nach dem sogenannten TDMA-Verfahren (Time Division Multiple Access) zur Basisstation BS übertragen werden. Sprachsignaldaten und Allgemeindaten enthaltende Datenpakete können dabei über einen gemeinsamen Kanal der Luftschnittstelle übermittelt werden. Die Basisstation BS gibt die empfangenen TCP/IP-Datenpakete anschließend an das Kommunikationsnetz KN weiter, das die TCP/IP-Datenpakete anhand der darin enthaltenen IP-Adressen zum jeweiligen Übermittlungsziel übertragen kann. Am jeweiligen Übermittlungsziel können die in den TCP/IP-Datenpaketen enthaltenen Sprachsignaldaten und Allgemeindaten gemäß TCP/IP-Protokoll schließlich wieder extrahiert und so die ursprünglichen Datenströme rekonstruiert werden.

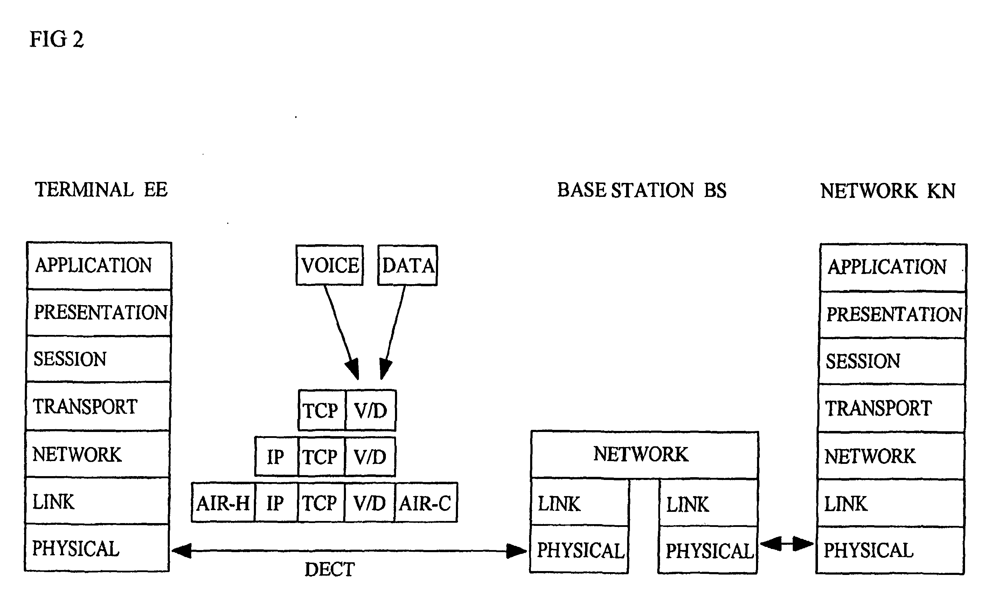

Fig 2 veranschaulicht die Übertragung von Sprachsignaldaten VOICE und Allgemeindaten DATA zwischen der Endeinrichtung (terminal) EE und dem Kommunikationsnetz (network) KN über die Basisstation (base station) BS anhand der beteiligten Übertragungsprotokolle. Die Übertragungsprotokolle sind dabei jeweils einzelnen Schichten des OSI-Referenzmodells zugeordnet.

Die im Umsetzungsmodul UM stattfindende Umsetzung der Sprachsignaldaten VOICE und Allgemeindaten DATA in TCP/IP-Datenpakete erfolgt im wesentlichen in der Transport-(transport layer) und Vermittlungsschicht (network layer), wo die zu übermittelnden Datenströme in Sprachsignaldaten und/oder Allgemeindaten enthaltende Datensegmente V/D zerlegt werden, die mit TCP- und IP-Kopfteilen zu TCP/IP-Datenpaketen zusammengesetzt werden. In der Sende/Empfangseinrichtung SE werden die TCP/IP-Datenpakete gemäß der Definition des DECT-Standards wiederum segmentiert und - mit Kopfteilen AIR-H und Prüfsummen AIR-C in einen Zeitmultiplexrahmen eingefügt (TDMA-Verfahren) - über die Luftschnittstelle zur Basisstation BS übertragen. Dort werden die TCP/IP-Datenpakete in den unteren beiden Protokollschichten (physical layer, link layer) wieder aus den Zeitmultiplexrahmen extrahiert und zusammengesetzt.

Während die Basisstation BS mit der Endeinrichtung EE über eine DECT-Luftschnittstelle gekoppelt ist, kann sie an das Kommunikationsnetz KN auf unterschiedliche Weise angeschlossen sein. Je nach Art der Anbindung können dem Datenaustausch zwischen Basisstation BS und Kommunikationsnetz KN unterschiedliche Übertragungsprotokolle, wie z.B. ISDN- oder Ethernet-Protokolle, auf den unteren Protokollschichten zugrunde liegen. Die Basisstation BS fungiert daher in der Regel als Umsetzer zwischen DECT-Protokoll und dem zum Datenaustausch mit dem Kommunikationsnetz KN verwendeten Übertragungsprotokoll. Eine über die unteren beiden Schichten hinausgehende Protokollumsetzung, z.B. durch ein sogenanntes Gateway, ist jedoch in der Regel nicht notwendig. Sofern das Kommunikationsnetz KN das TCP/IP-Protokoll ebenfalls unterstützt, können die TCP/IP-Datenpakete von der Basisstation BS unverändert dem Kommunikationsnetz KN übermittelt werden.

Zum Übermitteln von Sprachsignaldaten und Allgemeindaten in umgekehrter Richtung, d.h. aus dem Kommunikationsnetz KN zur Endeinrichtung EE, sind die oben beschriebenen Verfahrensschritte sinngemäß umzukehren. Die Sprachsignaldaten und Allgemeindaten werden in diesem Fall vom Kommunikationsnetz KN als an die Endeinrichtung EE adressierte TCP/IP-Datenpakete der Basisstation BS übermittelt, die sie über die DECT-Luftschnittstelle zur Sende/Empfangseinrichtung SE der Endeinrichtung EE weitergibt. Von dort werden die TCP/IP-Datenpakete dem Umsetzungsmodul UM zugeführt, wo die Sprachsignaldaten und Allgemeindaten gemäß TCP/IP-Protokoll aus den TCP/IP-Datenpaketen extrahiert und zu Datenströmen zusammengesetzt werden. Der Strom der Allgemeindaten wird dabei dem Ein/Ausgabemodul DIO und der Strom der Sprachsignaldaten über den A/D-D/A-Umsetzer DAU, der die digitalen Sprachsignaldaten in analoge Sprachsignale umsetzt, dem Ein/Ausgabemodul SIO zum Ausgeben zugeführt.

## Patentansprüche

1. Verfahren zum drahtlosen, quasisimultanen Übertragen von Sprachsignaldaten und Allgemeindaten zwischen einer Endeinrichtung (EE) und einer über eine mehrkanalige Luftschnittstelle mit der Endeinrichtung (EE) gekoppelten Basisstation (BS), über welche die Sprachsignaldaten und Allgemeindaten mit einem Kommunikationsnetz (KN) ausgetauscht werden,
**dadurch gekennzeichnet,**
**dass** zu übertragende Sprachsignaldaten und Allgemeindaten in digitale Datenpakete umgesetzt werden, die jeweils eine Netzadresse eines Übertragungsziels des jeweiligen Datenpakets als Zielinformation enthalten, und
**dass** die Datenpakete asynchron in einem gemeinsamen Kanal der Luftschnittstelle übertragen werden.

2. Verfahren nach Anspruch 1,
**dadurch gekennzeichnet,**
**daß** bei begrenzter Übertragungskapazität in Quasi-Echtzeit zu übertragende Sprachsignaldaten und/oder Videodaten bevorzugt übertragen werden.

3. Verfahren nach Anspruch 1 oder 2,
**dadurch gekennzeichnet,**
**daß** bei quasisimultaner Übertragung von Sprachsignaldaten und Videodaten, Sprachsignaldaten gegenüber Videodaten bevorzugt übertragen werden.

4. Verfahren nach einem der vorhergehenden Ansprüche,
**dadurch gekennzeichnet,**
**daß** von der Basisstation (BS) Datenpakete, die mit einer die Endeinrichtung (EE) identifizierenden Netzadresse gemäß einem im Kommunikationsnetz verwendeten Übertragungsprotokoll versehen sind, als an die Endeinrichtung (EE) adressiert erkannt und an diese übertragen werden.

5. Verfahren nach einem der vorhergehenden Ansprüche,
**dadurch gekennzeichnet,**
**daß** über eine Luftschnittstelle zu übertragende Daten vor dem Übertragen komprimiert werden.

6. Endeinrichtung (EE) zum drahtlosen, quasisimultanen Austausch von Sprachsignaldaten und Allgemeindaten mit einer über eine mehrkanalige Luftschnittstelle an die Endeinrichtung (EE) gekoppelten Basisstation (BS) zum Austauschen der Sprachsignaldaten und Allgemeindaten mit einem Kommunikationsnetz (KN), wobei die Endeinrichtung (EE) eine Ein/Ausgabeeinrichtung (SIO) für Sprachsignaldaten und eine Ein/Ausgabeeinrichtung (DIO) für Allgemeindaten enthält,
**gekennzeichnet durch**
eine Einrichtung (UM) zum Umsetzen der eingegebenen Sprachsignaldaten und Allgemeindaten in zu sendende digitale Datenpakete, die jeweils eine Netzadresse eines Übertragungsziels des jeweiligen Datenpakets als Zielinformation enthalten,
eine Einrichtung (UM) zum Extrahieren von auszugebenden Sprachsignaldaten und Allgemeindaten aus empfangenen digitalen Datenpaketen und
eine Sende/Empfangseinrichtung (SE) zum asynchronen Austausch von digitalen Datenpaketen mit der Basisstation (BS), wobei umgesetzte Sprachsignaldaten und Allgemeindaten zum Austausch im selben Kanal der Luftschnittstelle vorgesehen sind.

7. Endeinrichtung (EE) nach Anspruch 6,
**gekennzeichnet durch**
eine Einrichtung zum Steuern der jeweiligen Rate, mit der eingegebene Daten in digitale Datenpakete umgesetzt werden.

## Claims

1. Method for the wireless, quasi-simultaneous transmission of voice signal data and general data between a terminal device (EE) and a base station (BS) connected via a multi-channel air interface to the terminal device (EE), via which base station the voice signal data and general data is exchanged with a communication network (KN),
**characterised in that**
the voice signal data and general data to be transmitted is converted into digital data packets, each of which contains a network address of a transmission destination of the particular data packet as destination information, and
that the data packets are transmitted asynchronously in a common channel of the air interface.

2. Method in accordance with claim 1,
**characterised in that**
with, a limited transmission capacity, voice signal data and/or video data to be transmitted in quasi-real time is given priority in transmission.

3. Method in accordance with claim 1 or 2,
**characterised in that**
with quasi-simultaneous transmission of voice signal data and video data, voice signal data is given priority over video data in transmission.

4. Method in accordance with one of the preceding claims,
**characterised in that**
data packets from the base station (BS) that are provided with a network address identifying the terminal device (EE), in accordance with a transmission protocol used in the communication network, are identified as addressed to the terminal device (EE) and transmitted to same.

5. Method in accordance with one of the preceding claims,
**characterised in that**
data to be transmitted via an air interface is compressed before transmission.

6. Terminal device (EE) for wireless, quasi-simultaneous exchange of voice signal data and general data with a base station (BS) linked to the terminal device (EE) via a multi-channel air interface, for exchange of voice signal data and general data with a communication network (KN), with the terminal device (EE) having an input/output device (SIO) for voice signal data and an input/output device (DIO) for general data,
**characterised by**
a device (UM) for converting the input voice signal data and general data to digital data packets to be input, each containing a network address of a transmission destination of the particular data packet as destination information,
a device (UM) for extracting voice signal data and general data to be output from received data packets and
a transmitting/receiving device (SE) for the asynchronous exchange of digital data packets with the base station (BS), with converted voice signal data and general data being provided for exchange in the same channel of the air interface.

7. Terminal device according to claim 6,
**characterised by**
a device for controlling the particular rate at which the input data is converted to digital data packets.

## Revendications

1. Procédé pour la transmission sans fil et quasi simultanée de données de signaux vocaux et de données générales entre un terminal (EE) et une station de base (BS) couplée au moyen d'une interface radio multicanaux avec le terminal (EE), station par laquelle les données de signaux vocaux et les données générales sont échangées avec un réseau de communication (KN),
**caractérisé en ce que**
des données de signaux vocaux entrant et des données générales à transmettre sont converties en paquets de données numériques, qui contiennent respectivement une adresse de réseau d'un objectif de transmission du paquet de données respectif comme information cible, et **en ce que** les paquets de données sont transmis de façon asynchrone dans un canal commun à l'interface radio.

2. Procédé selon la revendication 1,
**caractérisé en ce que**,
avec une capacité de transmission limitée, on transmet de préférence des données de signaux vocaux et/ou des données vidéo à transmettre en temps quasi réel.

3. Procédé selon la revendication 1 ou 2,
**caractérisé en ce que**,
avec une transmission quasi simultanée de données de signaux vocaux et de données vidéo, des données de signaux vocaux sont transmises de préférence par rapport à des données vidéo.

4. Procédé selon l'une quelconque des revendications précédentes,
**caractérisé en ce que**
la station de base (BS) reconnaît des paquets de données, qui sont accompagnés d'une adresse de réseau identifiant le terminal (EE) selon un protocole de transmission utilisé dans le réseau de communication, comme des paquets adressés au terminal (EE) et les transmet à celui-ci.

5. Procédé selon l'une quelconque des revendications précédentes,
**caractérisé en ce que**
des données à transmettre par une interface radio sont comprimées avant la transmission.

6. Terminal (EE) pour l'échange sans fil et quasi simultané de données signaux vocaux et de données générales avec une station de base (BS) couplée au moyen d'une interface radio multicanaux au terminal (EE) pour l'échange des données de signaux vocaux et des données générales avec un réseau de communication (KN), le terminal (EE) contenant un appareil d'entrée/sortie (SIO) pour des données de signaux vocaux et un appareil d'entrée/sortie (DIO) pour des données générales,
**caractérisé par**
un appareil (UM) pour la conversion des données de signaux vocaux et des données générales entrées en paquets de données numériques à envoyer, qui contiennent respectivement une adresse de réseau d'un objectif de transmission du paquet de données respectif comme information cible,
un appareil (UM) pour l'extraction de données de signaux vocaux et de données générales à sortir à partir de paquets de données numériques reçus et
un appareil d'émission/réception (SE) pour l'échange asynchrone de paquets de données numériques avec la station de base (BS), des données de signaux vocaux converties et des données générales pour l'échange étant prévues dans le même canal de l'interface radio.

7. Terminal (EE) selon la revendication 6,
**caractérisé par**
un appareil pour le contrôle du débit respectif, avec lequel des données entrées sont converties en paquets de données numériques.
